# EUROPÄISCHE PATENTSCHRIFT

(11) **EP 1 525 419 B1**
(45) Veröffentlichungstag und Bekanntmachung des Hinweises auf die Patenterteilung: **18.07.2007**
(21) Anmeldenummer: 03735635.9
(22) Anmeldetag: 17.06.2003
(51) Int. Cl.: F16L 13/14

(54) **PRESSHÜLSENBESCHICHTUNG**
COATING FOR A PRESS SLEEVE
ENDUCTION DE MANCHONS DE COMPRESSION

(30) Priorität: 25.07.2002 DE 10233968
(43) Veröffentlichungstag der Anmeldung: 27.04.2005
(73) Patentinhaber: Uponor Innovation AB, 513 81 Fristad (SE)
(72) Erfinder: BOTT, Kilian, 97653 Bischofsheim (DE); SKORKA, Thomas, 78315 Radolfzell (DE)
(74) Vertreter: Hilleringmann, Jochen
(86) Internationale Anmeldenummer: PCT/EP2003/006358
(87) Internationale Veröffentlichungsnummer: WO 2004/015322

(56) Entgegenhaltungen:
- DE-A- 4 102 047
- US-A- 4 705 302

## Beschreibung

Gegenstand der Erfindung ist die Beschichtung von Presshülsen zur Verringerung der Presskräfte sowie der Kaltverschweißung von Pressbacken und Presshülse und zur Erhöhung der Korrosionsbeständigkeit und Standzeiten der Pressbacken und Presswerkzeuge und zur optischen Unterscheidung unverpresster Presshülsen von verpressten Hülsen.

Rohrverbindungen mittels Pressfittinge sind grundsätzlich bekannt (DE-C-196 37 608 und DE-C-197 49 748). Es ist ferner bekannt, dass Presshülsen von Pressfittingen auch aus Weichmetallen bestehen können; diese benötigen wesentlich weniger Presskraft als andere Presshülsen aus härteren Materialien. Einer der Nachteile von Weichmetallhülsen ist der Abrieb von Hülsenmaterial auf die Pressbackenflächen bei der Verpressung. Dieser Abrieb erhöht zum einen die Presskräfte erheblich und kann zum anderen zu Korrosion führen. Eine andere Folge dieses Abriebes ist die Zusetzung der Pressbacke mit metallischem Hülsenmaterial.

Es ist auch bekannt, dass Rohrverbindungssysteme mit Presshülsen mit Metallen beschichtet werden können. Eine solche Presshülse wird z. B. von der IPEX Inc., Kanada, vertrieben und weist Kupfer mit einer Zinnbeschichtung auf. Für diese Systeme trifft das oben Geschilderte in gleicher Weise zu.

Aus US-A-4,705,302 ist es bekannt, eine Hülse, die mittels einer axial über die Hülse verschiebbaren Andrückhülse gegen ein Rohr gedrückt wird, an ihrer Innen- und Außenseite mit einem Trockenschmierstoff zu versehen.

Eine Aufgabe der Erfindung ist es, die negativen Effekte von Weichmaterial-Presshülsen abzustellen und trotzdem die guten Eigenschaften einer Weichmetallhülse beizubehalten.

Zur Lösung dieser Aufgabe wird mit der Erfindung ein Verfahren zum Verpressen der Presshülse eines Pressfittings mittels eines Pressbacken aufweisenden Presswerkzeugs vorgeschlagen, bei dem eine Presshülse aus einem Nichteisen-Metall bzw. einer Nichteisen-Metalllegierung oder aus Kunststoff verwendet wird und die Presshülse an ihrer Außenseite und/oder die Pressbacken des Presswerkzeugs vor dem Verpressen mit einem Wachs oder einem Festschmierstoff beschichtet wird/werden, wie es in Anspruch 1 angegeben ist.

Ferner wird mit der Erfindung die Verwendung von Wachs- oder Festschmierstoff beschichteter Presshülsen bei Presswerkzeugen für Pressfittinge vorgeschlagen, wie es in Anspruch 2 angegeben ist.

Die nach der Erfindung zu verwendende Presshülse ist versehen mit einem Hülsenkörper aus einem Nichteisen-Metall bzw. einer Nichteisen-Metalllegierung oder aus Kunststoff und einer Wachs- oder Festschmierstoffbeschichtung auf der Außenseite des Hülsenkörpers.

Nach der Erfindung weist die Presshülse ein Nichteisen-(NE-)Metall bzw. eine NE-Metalllegierung auf, und zwar insbesondere ein NE-Leichtmetall bzw. eine NE-Leichtmetalllegierung auf (wie sie insbesondere in der DIN 17007 definiert sind). Hierbei handelt es sich um Aluminium oder Titan sowie Legierungen daraus. Alternativ kann die Presshülse aber auch aus Kupfer, Magnesium oder Metallen bestehen, die auch zur Münzprägung eingesetzt werden. Ferner ist es möglich, dass die Presshülse aus Legierungen dieser metallischen Materialien besteht.

Für die Beschichtung kommt erfindungsgemäß ein Wachs oder ein Festschmierstoff in Frage.

Diese Beschichtung der Presshülse bzw. Pressbacken dient der Reduzierung der Reibung zwischen der Presshülse und den Pressbacken und verhindert Kaltverschweißungen. Ferner wird durch die Beschichtung ein mechanisches Verklemmen von Presshülse und Pressbacken/Presszange vermieden bzw. verringert.

Die auftretenden Adhäsionskräfte sind vermindert. Die Beschichtung weist demnach gleitende Materialien auf. Diese Materialien dürfen während des Verpressvorgangs die Presskräfte nicht vergrößern. Sie sind dünn auftragbar und haften trotzdem gut. Ein Anhaften der Beschichtung in den Pressbackenflächen ist erwünscht. Die Hülsen sollten nicht korrosiv mit dem Beschichtungsmaterial reagieren.

Es sind folgende Stoffe als Beschichtungen geeignet:
- Festschmierstoffe
   - MoS₂,
   - Grafit und PTFE,
   - die Gruppe der amorphen Kohlenstoffverbindungen (a-C:H),
- Kunststoffe,
- Farben,
- Einbrennlack (System Qualicoat),
- Öle,
- Paste,
   - Festschmierstoff-Pulver,
   - Festschmierstoff-Pasten,
   - Festschmierstoff-Dispersionen und Gleitlacke.

Am besten geeignet zeigen sich Wachse, die sich aufteilen lassen in pflanzliche, Hart-, tierische und Mineralwachse. Von diesen vier Arten von Wachsen hat sich die Gruppe der mineralisch hergestellten Wachse als am besten geeignet gezeigt. Diese Wachse bestehen hauptsächlich aus geradkettigen Kohlenwasserstoffen. Diese können aber je nach Zusammensetzung auch verzweigte oder cycloaliphatische Kohlenwasserstoffe enthalten. Alternativ können Festschmierstoffe als Beschichtung der Presshülse eingesetzt werden.

Die Merkmale einer erfindungsgemäß beschichteten Presshülse bzw. eines erfindungsgemäß beschichteten Presswerkzeugs sind wie folgt:
- gute tribologische Eigenschaften (niedrigere Reibwerte gegenüber Pressbacke),
- gleich bleibende Qualität,
- Farbgleichheit,
- gute Haftung,
- Lichtechtheit,
- Wetterbeständigkeit,
- gute Dehnbarkeit,
- Belastbarkeit,
- Temperaturbeständigkeit bis 110 °C,
- Erweichungspunkt Beschichtung > 110 °C,
- dauerhafte Oberflächenwirkung,
- Kondenswasserbeständigkeit,
- kochfest,
- Schichtstärke so dünn wie möglich,
- gute optische Wirkung.

Die Beschichtung der Presshülse sollte ausschließlich auf der Außenfläche der Presshülse erfolgen bzw. angeordnet sein, und zwar zumindest in Teilbereichen der Außenflächen und hier insbesondere in denjenigen Bereichen, in denen die größeren Presskräfte wirken. Die Beschichtung kann farbig gestaltet sein, damit der Installateur auf einem Blick erkennen kann, ob eine Verpressung durchgeführt wurde. Durch das Verpressen wird die Oberflächenbeschichtung gewollt "beschädigt". Ferner hat man noch die Möglichkeit, die Fittinge nach dem Einsatzgebiet zu kennzeichnen, z.B. gelbe Presshülsen für Gas.

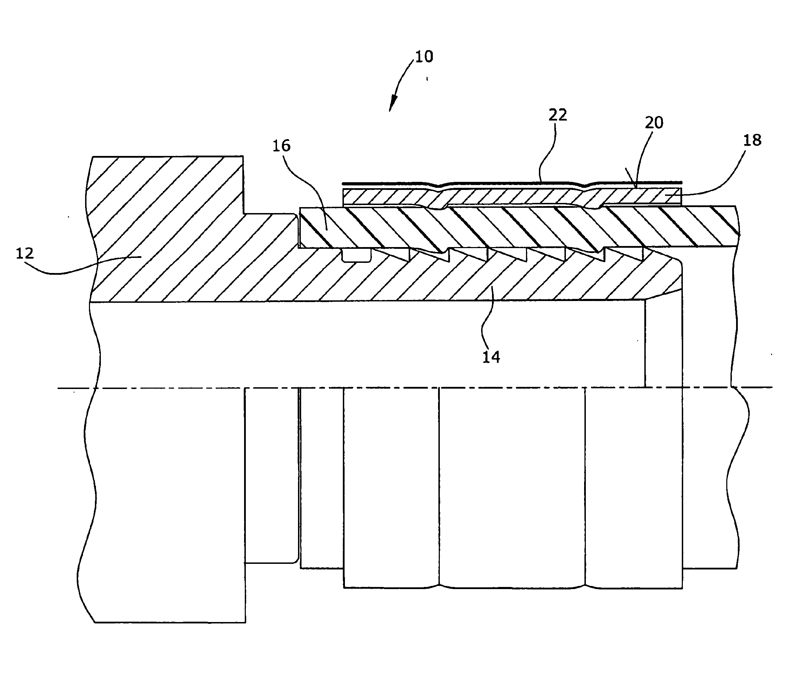

Ein Ausführungsbeispiel der Erfindung ist in der Zeichnung dargestellt.

Der Pressfitting 10 weist einen Fittingkörper 12 auf, der mit einer Stützhülse 14 für ein anzuschließendes Rohrende 16 versehen ist und eine Presshülse 18 aus einem weichen Material (Buntmetall), wie z.B. Aluminium, Aluminiumlegierung, Kupfer oder Kupferlegierung aufweist. Auf der Außenseite 20 der Presshülse 18 befindet sich eine Beschichtung, die bei 22 angedeutet ist. Diese Beschichtung besteht aus einem pflanzlichen, einem tierischen, einem Hart- oder einem Mineralwachs.

## Patentansprüche

1. Verfahren zum Verpressen der Presshülse eines Pressfittings mittels eines Pressbacken aufweisenden Presswerkzeugs, bei dem eine Presshülse (18) aus einem Nichteisen-Metall bzw. einer Nichteisen-Metalllegierung oder aus Kunststoff verwendet wird und die Presshülse (18) an ihrer Außenseite (20) und/oder die Pressbacken des Presswerkzeugs vor dem Verpressen mit einem Wachs (22) oder einem Festschmierstoff beschichtet wird/werden.

2. Verwendung einer Hülse mit einem Hülsenkörper (18) aus einem Nichteisen-Metall bzw. einer Nichteisen-Metalllegierung oder aus Kunststoff, und einer Wachs- oder Festschmierstoffbeschichtung (22) in zumindest Teilbereichen der Außenseite (20) des Hülsenkörpers (18) bei einem Pressfitting (10) zum Verpressen eines Rohres aus Kunststoff oder einem Kunststoff-Metall-Verbundwerkstoff gegen eine Stützhülse (14) des Pressfittings (10) mittels eines Pressbacken aufweisenden Presswerkzeuges.

## Claims

1. A method for pressing the press shell of a press fitting by means of a pressing tool comprising press jaws, wherein a press shell (18) comprising a non-iron metal and a non-iron metal alloy respectively, or plastic, is used, and the outer side (20) of the press shell (18) and/or the press jaws of the pressing tool are coated with a wax (22) or a solid lubricant before pressing.

2. The use of a shell comprising a shell body (18) of a non-iron metal and a non-iron metal alloy respectively, or plastic, and a wax or solid lubricant layer (22) at least in partial regions of the outer side (20) of the shell body (18) in a press fitting (10) for pressing a pipe of plastic or a plastic-metal composite material against a supporting sleeve (14) of the press fitting (10) by means of a pressing tool having press jaws.

## Revendications

1. Procédé pour presser le manchon de sertissage d'un raccord de sertissage au moyen d'un outil de sertissage ayant des mâchoires, dans lequel on utilise un manchon de sertissage (18) en un métal non-ferreux ou un alliage de métaux non-ferreux ou en matière plastique, et que la surface extérieure (20) du manchon de sertissage (18) et/ou les mâchoires de l'outil de sertissage est/sont enduites d'un cire (22) ou un lubrifiant solide avant le sertissage.

2. Utilisation d'un manchon ayant un corps de manchon (18) en un métal non-ferreux ou un alliage de métaux non-ferreux ou en matière plastique, et d'un enduit (22) en cire ou en lubrifiant solide au moins dans des parties de la surface extérieure (20) du corps du manchon (18) d'un raccord de sertissage (10) pour le sertissage d'un tuyau en matière plastique ou un composite plastique/métal sur un manchon de support (14) du raccard de sertissage (10) au moyen d'un outil de sertissage ayant des mâchoires.
